# EUROPEAN PATENT APPLICATION

(11) **EP 4 332 770 A1**
(43) Date of publication of application: **06.03.2024**
(21) Application number: 23183507.5
(22) Date of filing: 05.07.2023
(51) Int. Cl.: G06F 9/52, G06F 9/54, G06F 16/23

(54) **SYSTEMS AND METHODS FOR RECOVERY WITH A DISTRIBUTED LOCK MANAGER**

(30) Priority: 01.09.2022 US 202263403291 P; 08.11.2022 US 202217983382
(71) Applicant: Samsung Electronics Co., Ltd., Suwon-si, Gyeonggi-do 16677 (KR)
(72) Inventor: KUMAR, Vaibhav Kumar Bimal, San Jose, CA 95134 (US); RAMINENI, Siva, San Jose, CA 95134 (US); GOLLAPUDI, Venkata Bhanu Prakash, San Jose, CA 95134 (US)
(74) Representative: Kuhnen & Wacker Patent- und Rechtsanwaltsbüro PartG mbB

(57) **Abstract**

A system comprising a node and a lock manager is disclosed. The node includes a resource. The lock manager may include storage for a data structure for a lock. The data structure includes a first identifier for the resource, a second identifier for an application, and a status for the lock.

## Description

### FIELD

The disclosure relates generally to networks, and more particularly to rebuilding lock information after a network node failure.

### BACKGROUND

A network may include several nodes. Each node may include resources. Applications running on the network may access these resources. In some situations, the applications may request either shared or exclusive access to the resource, which denies other applications access to the resource.

A need remains for a way to rebuild information about which application is accessing which resource after a network node failure.

### SUMMARY

Embodiments of the disclosure include a system. The system may include a node including a resource. A lock manager may include storage for a data structure for a lock, identifying the resource, an application holding the lock, and a status for the lock.

According to an exemplary embodiment a system comprises a node including a resource; and a lock manager, the lock manager including storage for a data structure for a lock, the data structure including a first identifier for the resource, a second identifier for an application, and a status for the lock.

For example, the status is active.

For example, the status is inactive.

For example, the status for the lock identifies whether the lock is exclusive or shared.

For example, the lock manager is configured to update the status for the lock to an updated status based on a request from the application.

For example, the lock manager includes an Application Programming Interface, API, to receive the request from the application to update the status for the lock.

For example, the lock manager is configured to send the updated status for the lock to the node.

For example, the lock manager is configured to send the data structure to the node.

For example, a second lock manager is configured to request the data structure from the node to rebuild the data structure.

For example, the second lock manager is configured to include the second identifier for the application in the data structure based at least in part on the status for the lock being active.

For example, the second lock manager is configured to include the second identifier for the application in the data structure based at least in part on the status for the lock being active.

For example, the second lock manager is configured to send a signal to the application based at least in part on the data structure including the second identifier for the application.

For example, the signal indicates that the application does not hold the lock.

For example, the second lock manager is configured to send the signal to the application based at least in part on the application sending an activation request to the lock manager.

For example, the data structure omits the second identifier for the application.

According to an exemplary embodiment a method comprises: receiving a lock request for a resource at a node in a network from an application at a lock manager; determining that the resource at the node is unlocked; storing a lock at the lock manager, the lock associated with the resource at the node and the application; setting a status for the lock to active at the lock manager; and issuing the lock to the application from the lock manager.

For example, the method further comprises sending the lock and the status for the lock from the lock manager to the node.

For example, the lock request identifies whether the lock is exclusive or shared; and setting the status for the lock to active at the lock manager includes setting the status for the lock to exclusive or shared at the lock manager.

For example, the method further comprises: receiving an inactivation request for the lock from the application at the lock manager; and updating the status for the lock at the lock manager based at least on the request.

For example, updating the status for the lock at the lock manager based at least on the request includes updating the status for the lock at the lock manager to inactive based at least on the request.

For example, receiving the inactivation request for the lock from the application at the lock manager includes receiving the inactivation request for the lock from the application at an Application Programming Interface, API, of the lock manager.

For example, the method further comprises sending the status for the lock from the lock manager to the node.

For example, the method further comprises: receiving an activation request for the lock from the application at the lock manager; and updating the status for the lock to active at the lock manager.

For example, receiving the activation request for the lock from the application at the lock manager includes receiving the activation request for the lock from the application at an Application Programming Interface, API, of the lock manager.

For example, the method further comprises sending the status for the lock from the lock manager to the node.

According to an exemplary embodiment a method comprises: sending a query from a lock manager to the node, the query requesting an information about a lock for a resource at the node; receiving the information about the lock for the resource at the node at the lock manager, the information about the lock including an application holding the lock and a status for the lock; and establishing the lock to the application for the resource at the lock manager, wherein the status for the lock is set to active.

For example, the method further comprises selecting the lock manager.

For example, the method further comprises: receiving an inactivation request for the lock from the application at the lock manager; and setting the status for the lock at the lock manager based at least in part on the request.

For example, setting the status for the lock at the lock manager based at least in part on the request includes setting the status for the lock at the lock manager to inactive based at least in part on the request.

For example, receiving the inactivation request for the lock from the application at the lock manager includes receiving the inactivation request for the lock from the application at an Application Programming Interface, API, of the lock manager.

For example, the method further comprises sending the status for the lock from the lock manager to the node.

For example, the method is based at least in part on determining that an old lock manager has failed.

For example, the method further comprises: sending a second query from the lock manager to the node, the second query requesting a second information about a second lock for a second resource at the node; receiving the second information about the second lock for the second resource at the node at the lock manager, the second information about the second lock including a second application holding the second lock and a status for the second lock.

For example, the method further comprises sending a request from the lock manager to the node to purge the second lock at the node.

For example, the method further comprises not re-establishing the second lock at the lock manager, wherein the second status for the second lock is set to inactive.

For example, the method further comprises establishing a placeholder for the second lock for the second resource at the lock manager.

For example, the method further comprises: receiving an activation request for the second lock from the second application at the lock manager; and sending a signal to the second application from the lock manager.

For example, the signal indicates that the second application does not hold the second lock.

For example, receiving the activation request for the second lock from the second application at the lock manager includes receiving the activation request for the second lock from the second application at an Application Programming Interface, API, of the lock manager.

According to an exemplary embodiment an article comprises a non-transitory storage medium, the non-transitory storage medium having stored thereon instructions that, when executed by a machine, result in: receiving a lock request for a resource at a node in a network from an application at a lock manager; determining that the resource at the node is unlocked; storing a lock at the lock manager, the lock associated with the resource at the node and the application; setting a status for the lock to active at the lock manager; and issuing the lock to the application from the lock manager.

For example, the non-transitory storage medium has stored thereon further instructions that, when executed by the machine, result in sending the lock and the status for the lock from the lock manager to the node.

For example, the lock request identifies whether the lock is exclusive or shared; and setting the status for the lock to active at the lock manager includes setting the status for the lock to exclusive or shared at the lock manager.

For example, the non-transitory storage medium has stored thereon further instructions that, when executed by the machine, result in: receiving an inactivation request for the lock from the application at the lock manager; and updating the status for the lock at the lock manager based at least in part on the request.

For example, updating the status for the lock at the lock manager based at least on the request includes updating the status for the lock at the lock manager to inactive based at least on the request

For example, receiving the inactivation request for the lock from the application at the lock manager includes receiving the inactivation request for the lock from the application at an Application Programming Interface, API, of the lock manager.

For example, the non-transitory storage medium has stored thereon further instructions that, when executed by the machine, result in sending the status for the lock from the lock manager to the node.

For example, the non-transitory storage medium has stored thereon further instructions that, when executed by the machine, result in: receiving an activation request for the lock from the application at the lock manager; and updating the status for the lock to active at the lock manager.

For example, receiving the activation request for the lock from the application at the lock manager includes receiving the activation request for the lock from the application at an Application Programming Interface, API, of the lock manager.

For example, the non-transitory storage medium has stored thereon further instructions that, when executed by the machine, result in sending the status for the lock from the lock manager to the node.

According to an exemplary embodiment an article comprises a non-transitory storage medium, the non-transitory storage medium having stored thereon instructions that, when executed by a machine, result in: sending a query from a lock manager to the node, the query requesting an information about a lock for a resource at the node; receiving the information about the lock for the resource at the node at the lock manager, the information about the lock including an application holding the lock and a status for the lock; and establishing the lock to the application for the resource at the lock manager, wherein the status for the lock is set to active.

For example, the non-transitory storage medium has stored thereon further instructions that, when executed by the machine, result in selecting the lock manager.

For example, the non-transitory storage medium has stored thereon further instructions that, when executed by the machine, result in: receiving an inactivation request for the lock from the application at the lock manager; and setting the status for the lock at the lock manager based at least in part on the request.

For example, setting the status for the lock at the lock manager based at least in part on the request includes setting the status for the lock at the lock manager to inactive based at least in part on the request.

For example, receiving the inactivation request for the lock from the application at the lock manager includes receiving the inactivation request for the lock from the application at an Application Programming Interface, API, of the lock manager.

For example, the non-transitory storage medium has stored thereon further instructions that, when executed by the machine, result in sending the status for the lock from the lock manager to the node.

For example, the article is based at least in part on determining that an old lock manager has failed.

For example, the non-transitory storage medium has stored thereon further instructions that, when executed by the machine, result in: sending a second query from the lock manager to the node, the second query requesting a second information about a second lock for a second resource at the node; receiving the second information about the second lock for the second resource at the node at the lock manager, the second information about the second lock including a second application holding the second lock and a status for the second lock.

For example, the non-transitory storage medium has stored thereon further instructions that, when executed by the machine, result in sending a request from the lock manager to the node to purge the second lock at the node.

For example, the article further comprises: not re-establishing the second lock at the lock manager, wherein the second status for the second lock is set to inactive.

For example, the non-transitory storage medium has stored thereon further instructions that, when executed by the machine, result in establishing a placeholder for the second lock for the second resource at the lock manager.

For example, the non-transitory storage medium has stored thereon further instructions that, when executed by the machine, result in: receiving an activation request for the second lock from the second application at the lock manager; and sending a signal to the second application from the lock manager.

For example, the signal indicates that the second application does not hold the second lock.

For example, receiving the activation request for the second lock from the second application at the lock manager includes receiving the activation request for the second lock from the second application at an Application Programming Interface, API, of the lock manager.

### BRIEF DESCRIPTION OF THE DRAWINGS

The drawings described below are examples of how embodiments of the disclosure may be implemented, and are not intended to limit embodiments of the disclosure. Individual embodiments of the disclosure may include elements not shown in particular figures and/or may omit elements shown in particular figures. The drawings are intended to provide illustration and may not be to scale.
FIG. 1 shows a network including nodes with resources and a lock manager, according to embodiments of the disclosure.
FIG. 2 shows details of the machines of FIG. 1, according to embodiments of the disclosure.
FIG. 3 shows how the lock manager of FIG. 1 may be used to control access to the resources of FIG. 1, according to embodiments of the disclosure.
FIG. 4 shows a table of locks that may be used by the lock manager of FIG. 1, according to embodiments of the disclosure.
FIG. 5 shows an exchanges of messages for managing and rebuilding locks by the lock manager of FIG. 1, according to embodiments of the disclosure.
FIG. 6 shows the application of FIG. 1 being informed that its lock on the resources of FIG. 1 does not exist, according to some embodiments of the disclosure.
FIG. 7 shows a flowchart of an example procedure for the lock manager of FIG. 1 to issue a lock to the application of FIG. 1, according to embodiments of the disclosure.
FIG. 8 shows additional operations that may be performed by the lock manager of FIG. 1 in issuing a lock to the application of FIG. 1, according to embodiments of the disclosure.
FIG. 9 shows a flowchart of an example procedure for the lock manager of FIG. 1 to update the status of a lock held by the application of FIG. 1, according to embodiments of the disclosure.
FIG. 10 shows a flowchart of an example procedure for the lock manager of FIG. 1 to rebuild locks, according to embodiments of the disclosure.
FIG. 11 shows additional operations that may be performed by the lock manager of FIG. 1 in rebuilding locks, according to embodiments of the disclosure.
FIG. 12 shows a flowchart of an example procedure for the lock manager of FIG. 1 to determine whether to rebuild an individual lock, according to embodiments of the disclosure.
FIG. 13 shows a flowchart of an example procedure for the lock manager of FIG. 1 to inform the application of FIG. 1 that its lock on the resources of FIG. 1 does not exist, according to embodiments of the disclosure.

### DETAILED DESCRIPTION

Reference will now be made in detail to embodiments of the disclosure, examples of which are illustrated in the accompanying drawings. In the following detailed description, numerous specific details are set forth to enable a thorough understanding of the disclosure. It should be understood, however, that persons having ordinary skill in the art may practice the disclosure without these specific details. In other instances, well-known methods, procedures, components, circuits, and networks have not been described in detail so as not to unnecessarily obscure aspects of the embodiments.

It will be understood that, although the terms first, second, etc. may be used herein to describe various elements, these elements should not be limited by these terms. These terms are only used to distinguish one element from another. For example, a first module could be termed a second module, and, similarly, a second module could be termed a first module, without departing from the scope of the disclosure.

The terminology used in the description of the disclosure herein is for the purpose of describing particular embodiments only and is not intended to be limiting of the disclosure. As used in the description of the disclosure and the appended claims, the singular forms "a", "an", and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The components and features of the drawings are not necessarily drawn to scale.

A network may have various nodes. These nodes, being computers, may include processors, memory, storage, and other resources. Some resources, such as processors and memory, might be available at any node; other resources might be available only at some nodes (or at one particular node). For example, some nodes might not include storage device to store applications or data. Or some nodes might include additional resources not included in all nodes: for example, an attached printer or a connection to an external network.

Applications running on nodes in the network may utilize these resources. In some cases, applications may request share the resource. For example, multiple applications might share access to an external network, as the node with that connection may be able to direct data received across that connection to the appropriate application. If one application requests shared access to the resource, other applications might be blocked from requesting exclusive access to the resource. But in other cases, applications may want exclusive access to the resource. For example, an application that is using a printer to produce a huge report might not want other applications to print data that might end up interspersed within the report.

To prevent other applications for accessing a resource, an application may request a lock for the resource. Once the lock is granted, the application may have exclusive access to the resource. Any other applications wanting access to the resource may wait until the lock is released.

Locks may be managed by having a master node, which is responsible for granting lock requests. But if the master node fails, the lock information may be lost. To protect against this possibility, each node may store local copies of locks for the resources of that node. Then, when a new master node is selected, the new master node may query each node for its lock information, to rebuild the lock information to act as the new master node.

But rebuilding the lock information for the new master node may take time that is proportional to the number of locks in use. The more locks that have been issued, the longer it may take to rebuild the lock information. In networks that may include hundreds of thousands of locks or more, rebuilding the lock information may take a relatively large amount of time: minutes or more. The time spent rebuilding the lock information may represent a significant delay to the execution of applications.

Embodiments of the disclosure address this problem by adding a status flag to each lock. When an application is granted a lock, the lock may be assigned an active status. When the application has completed its current use of the resource, but does not want to release the lock (expecting to use the resource again in the future), the application may set the lock status to inactive. To start using the resource again, the application may set the lock status back to active.

If the master node fails, embodiments of the disclosure may be rebuilt only the locks that were in active status. Locks in inactive status may be discarded. By only rebuilding active locks, the amount of time needed to rebuilt the lock information may be reduced, potentially by several orders of magnitude.

In some embodiments of the disclosure, if an application that held a lock that was in inactive status attempts to activate the lock after the lock information is rebuilt, the application may be informed that the lost has been lost. In that case, the application may request the lock again.

Embodiments of the disclosure may support older applications that might not use the status flag. The status flag may be set to active when the application requests the lock. If the application does not change the status flag to inactive, then the lock may be rebuilt after a master node failure. The application may then continue to use the resource, since the lock is still active.

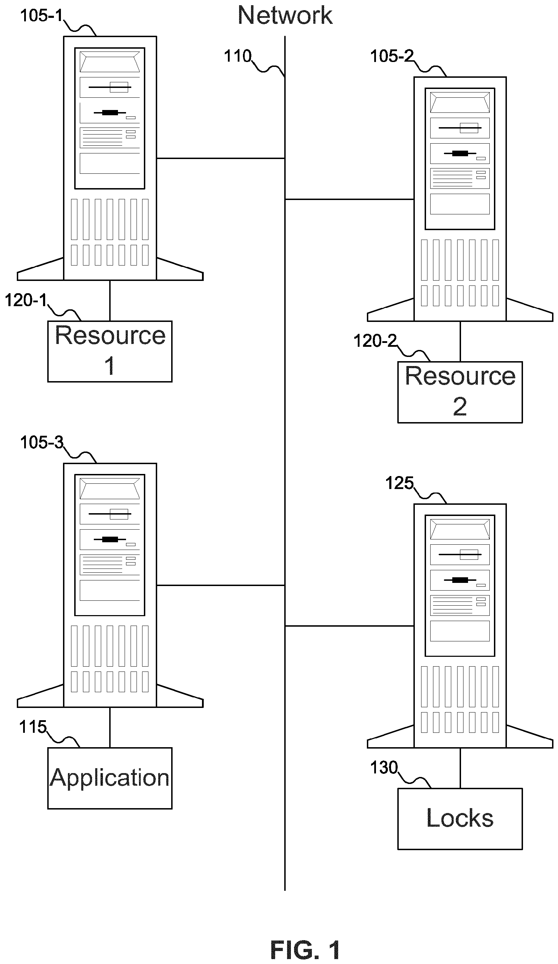

FIG. 1 shows a network including nodes with resources and a lock manager, according to embodiments of the disclosure. In FIG. 1, a system is shown. The system may include various nodes. For example, in FIG. 1, nodes 105-1, 105-2, and 105-3 are shown (which may be referred to collectively as nodes 105). Nodes 105 may be connected via network 110, so that they may communicate with each other and with other nodes connected to network 110, both nodes that are considered part of the system and nodes that are external to the system.

Each node, such as nodes 105, may be a computer. In addition to being called a computer, each node 105 may be called a machine, system, or host, among other terms. In FIG. 1, nodes 105 are shown as servers, but embodiments of the disclosure may include nodes 105 each individually taking any desired form, including personal computers, tablet computers, laptop computers, smart devices, servers (such as blade or rack servers), network attached storage with computing power, and the like.

Each node 105 may include various internal components. These internal components may include one or more processors, memory, storage devices, and/or other components, such as a network interface card (none of which are shown in FIG. 1).

The processors in each node 105 may be any variety of processor. Each processor may be single core or multi-core processors, each of which may implement a Reduced Instruction Set Computer (RISC) architecture or a Complex Instruction Set Computer (CISC) architecture (among other possibilities), and may be mixed in any desired combination.

The memory may be any variety of memory, such as flash memory, Dynamic Random Access Memory (DRAM), Static Random Access Memory (SRAM), Persistent Random Access Memory, Ferroelectric Random Access Memory (FRAM), or Non-Volatile Random Access Memory (NVRAM), such as Magnetoresistive Random Access Memory (MRAM) etc. The memory may be a volatile or non-volatile memory, as desired. The memory may also be any desired combination of different memory types, and may be managed by a memory controller. The memory may be used to store data that may be termed "short-term": that is, data not expected to be stored for extended periods of time. Examples of short-term data may include temporary files, data being used locally by applications (which may have been copied from other storage locations), and the like.

The processor and memory may also support an operating system under which various applications may be running. These applications may issue requests (which may also be termed commands) to read data from or write data to the memory or to a storage device. When a storage device is used to support applications reading or writing data via some sort of file system, the storage device may be accessed using a device driver. Each node 105 may include any number of storage devices. The storage devices may support any desired protocol or protocols, including, for example, the Non-Volatile Memory Express (NVMe) protocol. Different storage devices may support different protocols and/or interfaces. For example, a storage device might support a cache coherent interconnect protocol, which may support both block-level protocol (or any other higher level of granularity) access and byte-level protocol (or any other lower level of granularity) access to data on storage device. An example of such a cache coherent interconnect protocol is the Compute Express Link (CXL) protocol, which supports accessing data in blocks using the CXL.io protocol and accessing data in bytes using the CXL.mem protocol. In this manner, data on a CXL storage device may be accessed as either block-level data (like an SSD) or byte-level data (such as a memory): the CXL storage device may be used to extend the system memory.

While the above description uses the generic term "storage device", embodiments of the disclosure may include any storage device formats that may benefit from the use of computational storage units, examples of which may include hard disk drives and Solid State Drives (SSDs). Any reference to "SSD" below should be understood to include such other embodiments of the disclosure. Further, different types of storage devices may be mixed. For example, one storage device might be a hard disk drive, and another storage device might be an SSD.

Each node 105 may execute applications. FIG. 1 shows only node 105-3 executing one application 115, but embodiments of the disclosure may include any number (zero or more) of nodes 105 executing any number (zero or more) of applications, which each node 105 potentially executing a different number of applications 115. In addition, while FIG. 1 shows application 115 being executed by node 105-3 local to network 110, embodiments of the disclosure may include nodes 105 that are external to network 110 executing applications 115.

Each node 105 may also include one or more resources. FIG. 1 shows node 105-1 including resource 120-1, and node 105-2 including resource 120-2, but embodiments of the disclosure may include any number (zero or more) of resources attached to each node 105, which each node 105 potentially including a different number of resources 120. In addition, while FIG. 1 shows resources 120 attached to nodes 105-1 and 105-2 local to network 110, embodiments of the disclosure may include nodes 105 that are external to network 110 including resources 120.

Resources 120 may be any variety of resource that may be used by application 115. Examples of resources that may be used by application 115 may include a printer, a storage device, a network interface card, etc. Note that application 115 may use multiple resources at one time: there is no requirement that each application 115 be limited to using one resource 120. Thus, application 115 might use both resources 120-1 and 120-2.

In some situations, resources 120 may be shared by multiple applications 115. That is, two or more applications 115 may each access resources 120 at the same time. But in some situations, application 115 may request exclusive (non-shared) access to one or more of resources 120. For example, application 115 might be printing a lengthy report to a printer: if another application 115 were to print pages to that printer, those pages might become intermingled with the report generated by the first application. Since shared access to the printer might make it difficult to separate the pages printed by each application 115, requesting exclusive access to the printer may avoid this situation.

If application 115 is to have exclusive access to a resource 120, a lock manager 125 may be used to control which application(s) 115 have exclusive access to which resource(s) 120. Because lock manager 125 may manage locks on various nodes 105 distributed across network 110, lock manager 125 may also be termed a distributed lock manager. Lock manager 125 may be custom hardware designed to manage locks for resources 120, or lock manager 125 may be software running on a processor on a node (in which case lock manager 125 might host resources 120 and/or applications 115). For purposes of discussion, lock manager 125 may be considered a node on network 110, however lock manager 125 is implemented.

While FIG. 1 shows lock manager 125 as a separate node 105 connected to network 110, embodiments of the disclosure may include multiple lock managers 125 across network 110. Each such lock manager 125 may manage locks for resources 120 on some set of nodes 105. Each set of nodes 105 may include one or more nodes 105, and for any two sets of nodes 105 managed by different lock managers 125, those two sets of nodes 105 might be the same set of nodes 105, might partially overlap (that is, the intersection of the two sets of nodes 105 might not be empty), or might not overlap at all (that is, the intersections of the two sets of nodes 105 might be empty). In general, each resource 120 may have locks managed by a single lock manager 125, but in some embodiments of the disclosure, two or more lock managers 125 might both issue locks for a single resource 120 (in which case the lock managers 125 may communicate with each other to ensure that they do not individually each issue a lock for that resource 120 to different applications 115).

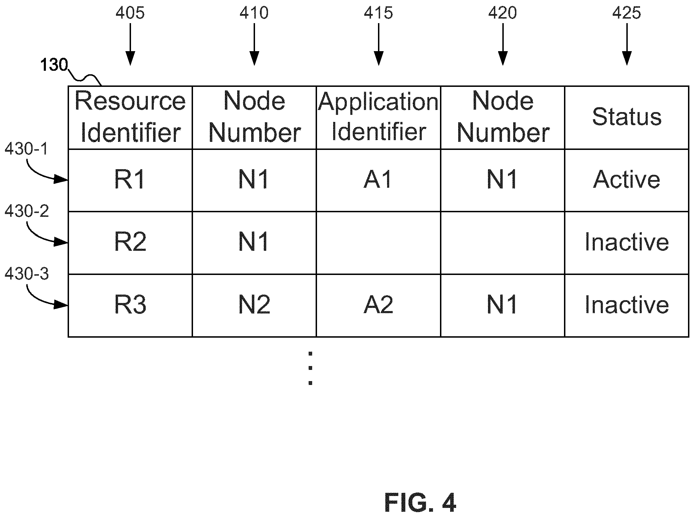

Lock manager 125 may use table 130 to store information about which resources 120 (at least, resources 120 for which lock manager 125 manages the locks) are locked, and by which applications 115. Table 130 is an example data structure that may be used to store information about locks: embodiments of the disclosure may use other data structures to store such information, without limitation. Table 130 is discussed further with reference to FIG. 4 below.

Application 115 may request the lock from lock manager 125 using any desired protocol. As an example, application 115 may use the Blocking Asynchronous Trap (Blocking AST or BAST) protocol to request the lock for resource 120. Embodiments of the disclosure are well suited for protocols that permit application 115 to hold a lock even after application 115 has completed use of resource 120, but may be used with other lock protocols as well.

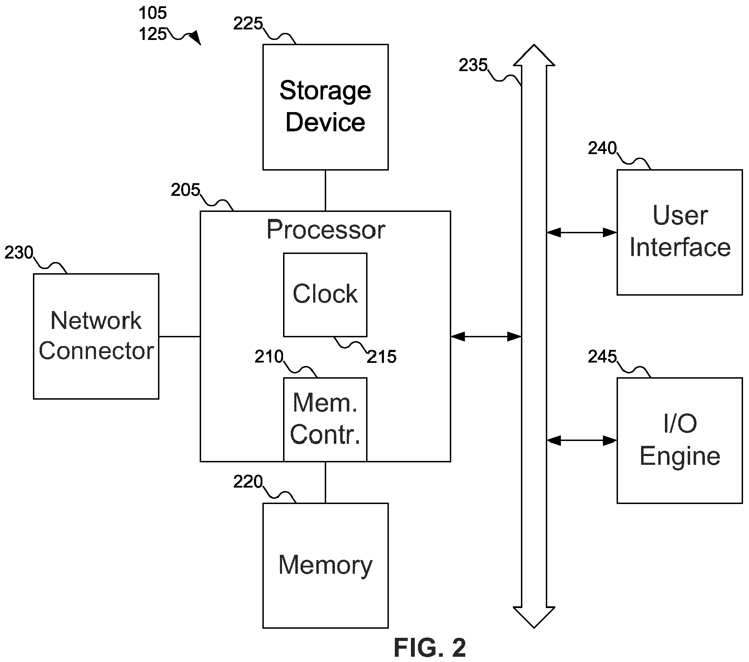

FIG. 2 shows details of nodes 105 and 125 of FIG. 1, according to embodiments of the disclosure. In FIG. 2, typically, machine 105 and 125 includes one or more processors 205, which may include memory controllers 210 and clocks 215, which may be used to coordinate the operations of the components of the machine. Processors 205 may also be coupled to memories 220, which may include random access memory (RAM), read-only memory (ROM), or other state preserving media, as examples. Processors 205 may also be coupled to storage devices 225, and to network connector 230, which may be, for example, an Ethernet connector or a wireless connector. Processors 205 may also be connected to buses 235, to which may be attached user interfaces 240 and Input/Output (I/O) interface ports that may be managed using I/O engines 245, among other components.

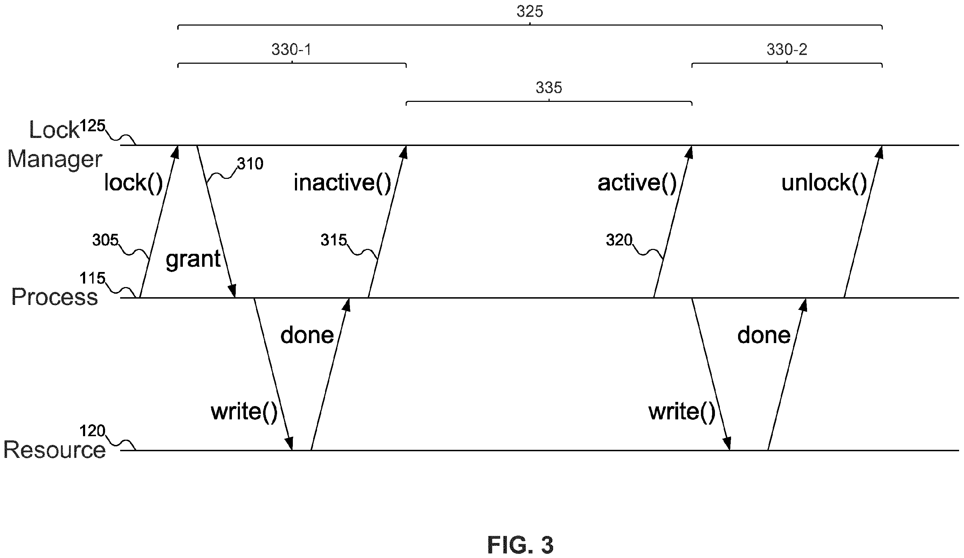

FIG. 3 shows how lock manager 110 of FIG. 1 may be used to control access to resources 120 of FIG. 1, according to embodiments of the disclosure. In FIG. 3, lock manager 125, process 115 (which may be a process of an application), and resource 120 are shown.

When process 115 desired exclusive access to resource 120, process 115 may issue a request for the lock for resource 115, shown as lock request 305. Lock manager 125 may receive this request, and may then issue send message 310 to processor 115 that the lock on resource 120 has been granted to process 115. At this point, process 115 may write data to resource 120 (or otherwise utilize resource 120): resource 120 may respond by indicating when the write process (or other utilization) is complete.

As discussed above, when process 115 requests the lock from lock manager 125. In some situations, process 115 might release the lock on resource 120 as soon as resource 120 reports that it has completed the processing requested by process 115. But in some embodiments of the disclosure, process 115 might retain the lock on resource 120 even though process 115 might not be actively using resource 120. In such embodiments of the disclosure, process 115 may send inactivation request 315 to lock manager 125. By sending inactivation request 315 to lock manager 125, process 115 may inform lock manager 125 that process 115 is no longer actively using resource 120, but still wants to retain the lock on resource 120. Lock manager 125 may then update the information about the lock for resource 120 to indicate that the lock is currently inactive. To assist lock manager 125 in setting the status of the lock to inactive, inactivation request 315 may identify, for example, process 115 as holding the lock, resource 120 as the subject of the lock, and/or the lock itself. Lock manager 125 may use any of this information to identify the lock in table 130 of FIG. 1 and/or to verify that process 115 holds the lock (and therefore has the authority to set the lock status to inactive).

At some point, process 115 may send activation request 320 to lock manager 125. By sending activation request 320 to lock manager 125, process 115 may inform lock manager 125 that process 115 is actively using resource 120 again. To assist lock manager 125 in setting the status of the lock to active, activation request 320 may identify, for example, process 115 as holding the lock, resource 120 as the subject of the lock, and/or the lock itself. Lock manager 125 may use any of this information to identify the lock in table 130 of FIG. 1 and/or to verify that process 115 holds the lock (and therefore has the authority to set the lock status to active). Process 115 may then write data to resource 120 (or otherwise utilize resource 120), and resource 120 may respond by indicating when the write process (or other utilization) is complete.

In some embodiments of the disclosure, process 115 may eventually send an unlock request to lock manager 125. This unlock request may inform lock manager 125 that process 115 is done using resource 120, and that resource 120 may be used by other processes.

As may be seen, process 115 may hold the lock for resource 120 for an interval of time, shown as interval 325. But process 115 might not be using resource 120 for the entirety of interval 325. Interval 325 may be divided into portions where process 115 is actively using resource 120 (shown as active intervals 330-1 and 330-2, which may be referred to collectively as active interval 330), and where process 115 is not actively using resource 120 (shown as inactive interval 335). While FIG. 3 shows two active intervals 330 and one inactive interval 335, embodiments of the disclosure may include any number (zero or more) of active intervals 330 and/or inactive intervals 335.

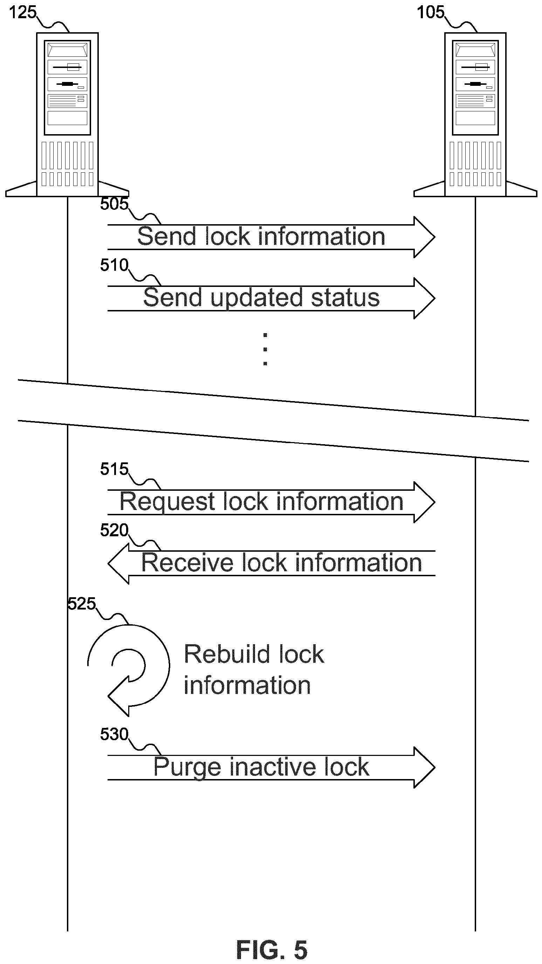

In some embodiments of the disclosure, inactive intervals 335 may represent a large percentage of interval 325 (and active intervals 330 may represent a small percentage of interval 325). That is, for most of the time that process 115 might hold the lock for resource 120, process 115 might not actively be using resource 120. Storing when process 115 is actively using resource 120 versus when process 115 is not actively using resource 120 may become relevant if, for example, lock manager 125 fails or becomes inoperative and a new lock manager may be needed to manage the locks formerly managed by lock manager 125. Rebuilding the locks managed by lock manager 125 is discussed further with reference to FIG. 5 below.

Some additional points about FIG. 3 are worth mentioning.

First, it might happen that when process 115 sends lock request 305 to lock manager 125, resource 120 is currently locked by another process 115. In that case, lock manager 125 may send a message to the process 115 currently holding the lock for resource 120, requesting that that process 115 release the lock on resource 120. That process 115 may then send an unlock request to lock manager 125 to release the lock on resource 120. Once that process 115 has released the lock on resource 120, lock manager 125 may then send message 310 to process 115, granting process 115 the lock on resource 120. In some embodiments of the disclosure, process 115 may be blocked (that is, process 115 may not perform any operations) until process 115 received message 310 granting process 115 the lock on resource 120. In other embodiments of the disclosure, process 115 may be able to carry out operations while waiting for message 310 granting the lock on resource 120 to process 115 (but not any operations that involve resource 120).

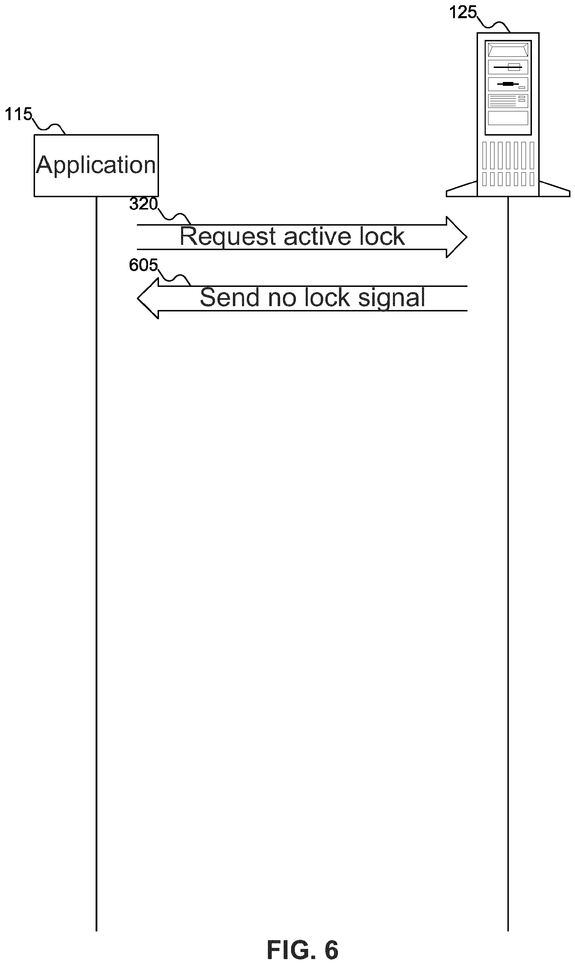

Second, FIG. 3 does not show lock manager 125 issuing any acknowledgements regarding inactivation request 315 or activation request 320. That is, once process 115 issues either inactivation request 315 or activation request 320, process 115 may continue to operate as though lock manager 125 has received and processed requests 315 or 320. But in some embodiments of the disclosure, process 115 might wait to receive an acknowledgement from lock manager 125 that the status of the lock on resource 120 has been changed. This may be relevant particularly for activation request 310: if, for example, lock manager 125 failed sometime before activation request 320 is received at lock manager, the lock for resource 120 might not have been rebuilt in favor of process 115, and another process 115 might actually hold the lock for resource 120. This situation is discussed further with reference to FIG. 6 below.

Third, by default, the lock is considered to have active status upon its grant to process 115. That is, it may be assumed that process 115 will begin using resource 120 immediately or relatively soon. Therefore, process 115 does not need to establish the status of the lock upon its request, and only issues requests 315 and/or 320 thereafter.

The choice for the lock to default to active status has the benefit that existing applications 115 may continue to function without modification. Changing the status of the lock on resource 120 is a benefit to the operation of lock manager 125, but it not required. Thus, existing applications 115 may continue to function without having to issue requests 315 and/or 320.

Fourth, in some embodiments of the disclosure, process 115 may send a request for shared access to resource 120, rather than lock request 305, to lock manager 125. While it might seem unnecessary for process 115 to request shared access to resource 120, there are a couple of reasons why such a request is useful. First, if resource 120 of FIG. 1 is locked by another process 115 for exclusive access, then process 115 should not be permitted to access resource 120 until that process 115 has released its lock on resource 120. Second, by informing lock manager 125 that process 115 wants shared access to resource 120, lock manager 125 may know to block a request by another process 115 for exclusive access to resource 120 until process 115 releases its shared access to resource 120.

FIG. 4 shows a table of locks that may be used by lock manager 125 of FIG. 1, according to embodiments of the disclosure. In FIG. 4, table 130 is shown in more detail. Table 130 may include columns for identifiers 405 for resources 120 of FIG. 1, for identifiers 410 for nodes 105 of FIG. 1 associated with resources 120 of FIG. 1, for identifiers 415 for applications 115 of FIG. 1 holding locks on resources 120 of FIG. 1, for identifiers 420 for nodes 105 of FIG. 1 executing applications 115 of FIG. 1, and for statuses 425 for the locks held by applications 115 of FIG. 1 on resources 120 of FIG. 1.

Table 130 also shows three locks 430-1, 430-2, and 430-3 (which may be referred to collectively as locks 430) on resources 120 of FIG. 1. Lock 430-1 shows that the resource with the identifier R1, attached to node N1, is currently held by application A1 executing on node N1, and is currently in active use. Lock 430-2 shows that the resource with the identifier R2, attached to node N1, is not currently held by any application 115 (the status for lock 430-2, while shown as inactive, is therefore irrelevant). Lock 430-3 shows that the resource with the identifier R3, attached to node N2, is currently held by application A2 running on node N1, but is currently inactive.

Lock manager 125 of FIG. 1 may share copies of the information regarding locks 430 with nodes 105 of FIG. 1 associated with resources 120 of FIG. 1 which are managed by lock manager 125-1 of FIG. 1. Thus, for example, lock manager 125 of FIG. 1 may share locks 430-1 and 430-2 with the node N1, and may share lock 430-3 with the node N2. This shared lock information may be used to rebuild locks 430, should it be necessary to rebuild locks 430 (for example, if lock manager 125 of FIG. 1 fails). Note that in this context, the term "share" may be understood to refer to sharing the information within locks 430, but not the responsibility for managing locks 430: managing locks 430 may remain with lock manager 125 of FIG. 1. In some embodiments of the disclosure, lock manager 125 of FIG. 1 may share copies of information regarding locks 430 with nodes 105 of FIG. 1 that are associated with the resources 120 of FIG. 1 for which locks 430 are managed; in other embodiments of the disclosure, lock manager 125 of FIG. 1 may share copies of the information in table 130 with any desired node 105 of FIG. 1, to act as a backup, in case of a problem with either table 130 or lock manager 125 of FIG. 1.

Note that the inclusion of both resource identifier 405 and node number 410 is helpful in case two or more resources 120 of FIG. 1 might have the same identifier 405. If each resource 120 of FIG. 1 has a unique identifier 405 (or at least, a unit identifier 405 among all locks managed by lock manager 405), then node number 410 might be omitted.

In a similar manner, the inclusion of both application identifier 415 and node number 420 is helpful in case two or more application 115 of FIG. 1 might have the same identifier 415. If application identifier 415 is unique among all applications 115 of FIG. 1 on nodes 105 of FIG. 1 across network 110 of FIG. 1, then node number 420 might be omitted.

While FIG. 4 only shows applications A1 and A2 each holding a lock on one resource 120 of FIG. 1 apiece, as discussed above with reference to FIG. 1, any application 115 of FIG. 1 might access more than one resource 120 of FIG. 1. Since application 115 of FIG. 1 might exclusive access to two or more resources 120 of FIG. 1, in some embodiments of the disclosure table 130 may include two or more locks 430 on two or more resources 120 of FIG. 1 by a single application 115 of FIG. 1.

In some embodiments of the disclosure, there might be resources 120 of FIG. 1 that may not be locked: such resources might always be subject to sharing among applications 115 of FIG. 1. But in some embodiments of the disclosure, it might happen that any resource 120 of FIG. 1 on any node 105 of FIG. 1 across network 110 of FIG. 1 might be subject to locking. Having all applications 115 of FIG. 1 notify lock manager 125 of FIG. 1 that they are using resources 120 of FIG. 1 may be beneficial in the situations where any application 115 of FIG. 1 might lock resources 120 of FIG. 1 at any time. In that situation, lock manager 125 of FIG. 1 may notify applications 115 of FIG. 1 that a particular resource 120 of FIG. 1 has been locked by a particular application 115 of FIG. 1, in which case other applications 115 of FIG. 1 may wait for the lock to be released before using the resource again.

As discussed with reference to FIG. 3 above, in some embodiments of the disclosure, application 115 of FIG. 1 might request shared access to resource 120 of FIG. 1. If lock manager 125 of FIG. 1 may also track which resources are requested for shared access, the information in table 130 may be expanded. For example, status 425 may include more than two states: For example, status 425 might be set to one of active, inactive, or shared. Or status 425 may be divided even further: active locked, active shared, inactive locked, and inactive shared (so that the applications 115 of FIG. 1 that are sharing access to resource 120 of FIG. 1 may also set status to active or inactive). In addition, because multiple applications 115 of FIG. 1 might share access to a resource, identifier 415 might include identifiers of multiple applications 115 of FIG. 1, which list may grow or shrink as applications 115 of FIG. 1 request and/or release shared access to resource 120 of FIG. 1.

FIG. 5 shows an exchanges of messages for managing and rebuilding locks by lock manager 125 of FIG. 1, according to embodiments of the disclosure. In FIG. 5, lock manager 125 may send message 505 to node 105, which may include information from table 130 of FIG. 1 about one or more locks 430 of FIG. 4 in table 130 of FIG. 1. Lock manager 125 may also send messages 510 updating the status 425 of FIG. 4 of locks 430 of FIG. 4 in table 130 of FIG. 1, as status 425 of FIG. 4 is updated for lock 430 of FIG. 4 in table 130 of FIG. 1. Messages 505 and/or 510 may be sent multiple times to node 105, depending on the establishment and closure of locks 430 of FIG. 4 in table 130 of FIG. 1, or updates to status 425 of FIG. 4 in table 130 of FIG. 1.

At some point, it may become necessary to rebuild locks 430 of FIG. 4 in table 130 of FIG. 1. For example, table 130 of FIG. 1 might become corrupted in some way, or lock manager 125 might stop working. Regardless of the reason, it might happen that locks 430 of FIG. 4 in table 130 of FIG. 1 are effectively lost. In that case, a new lock manager 125 may be selected. The new lock manager 125 might be the same lock manager 125 as before (if, for example, lock manager 125 is still functional but table 130 of FIG. 1 became corrupted), or a new node 105 may be selected to replace the old lock manager 125. Regardless of which node 105 of FIG. 1 operates as lock manager 125, the new lock manager 125 may send request 515 to node 105, asking for information about locks 430 of FIG. 4 that had been managed by the old lock manager 125. The new lock manager 125 may then receive message 520, including the lock information regarding locks 430 of FIG. 4 that were copied to node 105. Note that if copies of locks 430 of FIG. 4 were distributed across multiple nodes 105 of network 110-for example, if each node 105 stores copies of locks 430 for resources 120 of FIG. 1 associated with that node 105-then the new lock manager 125 may send requests 515 to multiple nodes 105, and may receive in response multiple messages 520.

Once the new lock manager 125 has received information about locks 430 of FIG. 4 from node(s) 105, the new lock manager 125 may begin rebuilding locks 430 of FIG. 4 from the information, shown as operation 525. But rather than rebuilding all locks 430 of FIG, 4, the new lock manager 125 may rebuild only locks 430 of FIG. 4 with statuses 425 of FIG. 4 set to active. Put another way, the new lock manager 125 of FIG. 4 may skip, omit, refuse, decline, or otherwise opt not to rebuild locks 430 of FIG. 4 with statuses 425 of FIG. 4 set to inactive.

Since lock manager 125 might need to rebuilt locks 430 of FIG. 4, in some embodiments of the disclosure lock manager 125 of FIG. 1 might not manage locks 430 of FIG. 4 for resources 120 of FIG. 1 associated with lock manager 125. In this manner, a copy of lock 430 of FIG. 4 may be stored somewhere else for rebuilding purposes. Alternatively, in some embodiments of the disclosure, a designated node 105 of FIG. 1 may store information for locks 430 of FIG. 4 for resources 120 of FIG. 1 associated with lock manager 125 (and possibly for locks 430 of FIG. 4 for resources 120 of FIG. 1 associated with other nodes 105 as well).

By only rebuilding locks 430 of FIG. 4 with statuses 425 of FIG. 4 set to active, the new lock manager 430 may complete rebuilding locks 430 of FIG. 4 more quickly. For example, assume that there are 1,000,000 locks 430 of FIG. 4 in table 130 of FIG. 3, and further assume that it takes approximately 100 microseconds (µs) to rebuild a single lock 430 of FIG. 4. Rebuilding 1,000,000 locks would take 1,000,000 × 100 µs = 100,000,000 µs, or approximately 1.67 minutes. Within network 110 of FIG. 1, a delay of almost two minutes might be considered nearly interminable. But if only a small fraction-for example, 0.1%-of locks 430 of FIG. 4 have a status 425 of FIG. 4 as active, then only 1000 locks would be rebuilt, taking 1000 × 100 µs = 100,000 µs, or approximately 0.1 seconds.

The question may arise: what about applications 115 of FIG. 1 that have locks with status 425 of FIG. 4 of inactive? Might those applications 115 of FIG. 1 expect that they can continue to use resources 120 of FIG. 1 as though resources 120 of FIG. 1 were still locked? The answer is that to put lock 430 of FIG. 4 into a status 425 of FIG. 4 of inactive, application 115 of FIG. 1 would have sent inactivation request 315 of FIG. 3. But if application 115 of FIG. 1 has already sent inactivation request 315 of FIG. 3, then application 115 of FIG. 1 would know to send activation request 320 of FIG. 3 as well. Upon receiving activation request 320 of FIG. 3, if the lock 430 was not rebuilt, lock manager 125 may send a signal informing application 115 of FIG. 1 that lock 430 of FIG. 4 for resource 120 of FIG. 1 no longer exists, and application 115 of FIG. 1 may once again send lock request 305 of FIG. 3 to secure lock 430 of FIG. 4 for resource 120 of FIG. 1 anew.

Finally, the new lock manager 125 may send message 530 to node 105, informing node 105 that an inactive lock was not rebuilt. In this way, node 105 may know to remove any information about inactive locks that were not rebuilt. For example, if node 105 is node N1, message 530 may inform node N1 that lock 430-2 of FIG. 4 was not rebuilt, and node N1 may remove lock 430-2 of FIG. 4 from its copy of table 130 of FIG. 1.

FIG. 6 illustrates this situation. In FIG. 6, application 115 of FIG. 1 sends activation request 320 of FIG. 3 to lock manager 125. In response, if lock 430 of FIG. 4 for which application 115 of FIG. 3 is requesting active status, lock manager 125 may send signal 605 to application 115, to inform application 115 that the lock no longer exists and application 115 may reestablish the lock.

In some embodiments, rather than sending signal 605 to application 115 in response to application 115 sending activation request 320, lock manager 125 may send signal 605 as part of rebuilding locks 430 of FIG. 4. Put another way, when lock manager 125 determines that lock 430 of FIG. 4 should not be reestablished immediately because status 425 of FIG. 4 for lock 430 of FIG. 4 was inactive, lock manager 125 may send signal 605 proactively to application 115, to let application 115 know that it has lost lock 430 of FIG. 4.

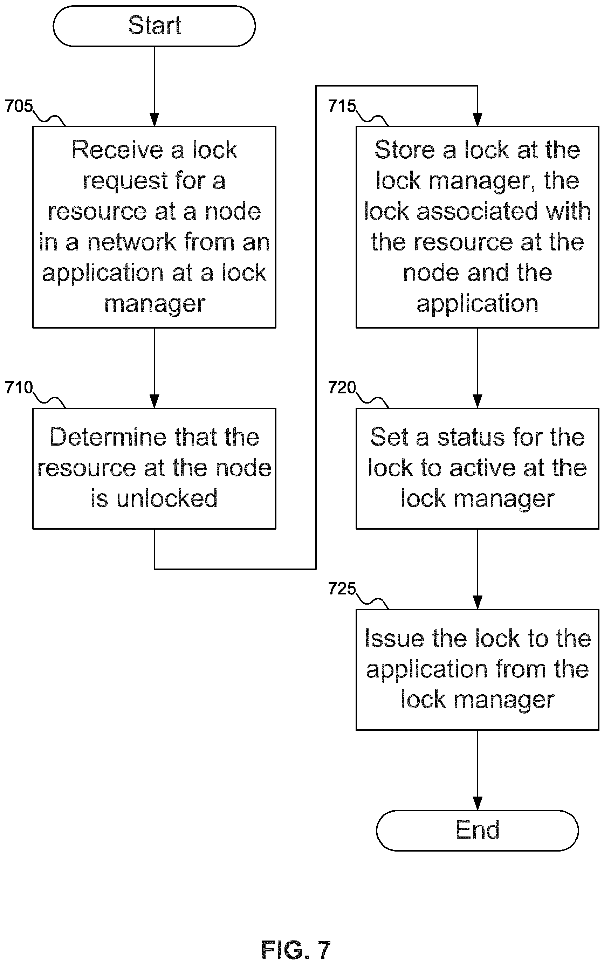

FIG. 7 shows a flowchart of an example procedure for lock manager 125 of FIG. 1 to issue lock 430 of FIG. 4 to application 115 of FIG. 1, according to embodiments of the disclosure. In FIG. 7, at block 705, lock manager 125 of FIG. 1 may receive lock request 305 of FIG. 3 from application 115 of FIG. 1, requesting that resource 120 of FIG. 1 be locked for use by application 115 of FIG. 1. At block 710, lock manager 125 of FIG. 1 may determine that resource 120 of FIG. 1 is not currently locked by another application 115 of FIG. 1. If resource 120 of FIG. 1 is currently locked by another application 115 of FIG. 1, lock manager 125 of FIG. 1 may inform the other application 115 of FIG. 1, which may then send a request to release lock 430 of FIG. 4 on resource 120 of FIG. 1.

Once lock manager 125 of FIG. 1 has determined that resource 120 of FIG. 1 is currently unlocked, at block 715, lock manager 125 of FIG. 1 may store lock 430 of FIG. 1 (for example, in table 130 of FIG. 1 or some other data structure). Lock 430 may be associated with resource 120 of FIG. 1 and may indicate that application 115 of FIG. 1 holds the lock. At block 720, lock manager 125 of FIG. 1 may set status 425 of FIG. 4 for lock 430 of FIG. 4 to active. Finally, at block 725, lock manager 125 may inform application 115 of FIG. 1 that it holds lock 430 of FIG. 4 for resource 120 of FIG. 1.

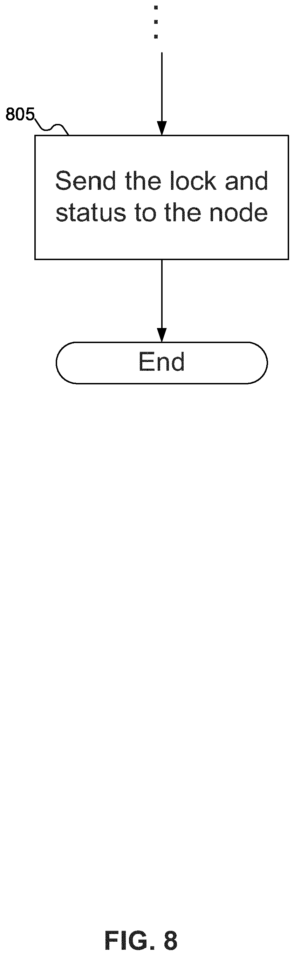

FIG. 8 shows additional operations that may be performed by lock manager 125 of FIG. 1 in issuing lock 430 of FIG. 4 to application 115 of FIG. 1, according to embodiments of the disclosure. As discussed above, after lock 430 of FIG. 4 has been established, at block 805, lock manager 125 of FIG. 1 may send a copy of lock 430 of FIG. 4 and status 425 of FIG. 4 to node 105 of FIG. 1. Lock manager 125 of FIG. 1 may send this information to node 105 of FIG. 1 associated with resource 120 of FIG. 1, or to any other node 105 of FIG. 1 (which might be chosen, for example, to store the information about lock 430 of FIG. 4 for backup purposes).

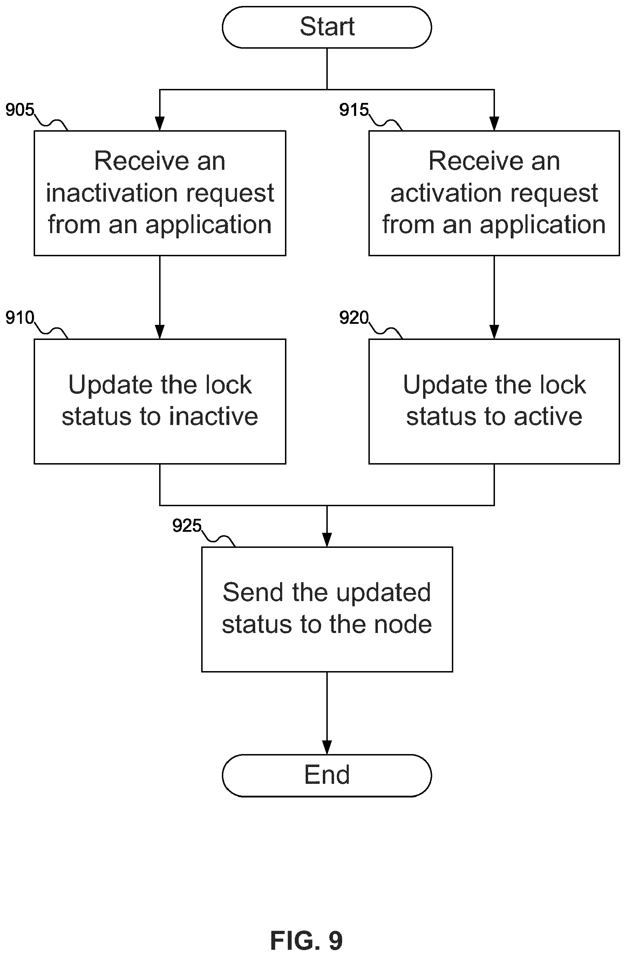

FIG. 9 shows a flowchart of an example procedure for lock manager 125 of FIG. 1 to update status 425 of FIG. 4 of lock 430 of FIG. 4 held by application 115 of FIG. 1, according to embodiments of the disclosure. In FIG. 9, at block 905, lock manager 125 of FIG. 1 may receive inactivation request 315 of FIG. 3 from application 115 of FIG. 1. Inactivation request 315 of FIG. 3 may identify, for example, application 115 of FIG. 1 as holding lock 430 of FIG. 4, resource 120 of FIG. 1 as the subject of lock 430 of FIG. 4, and/or lock 430 of FIG. 4 itself. At block 910, lock manager 125 of FIG. 1 may change status 425 of FIG. 4 for lock 430 of FIG. 4 to inactive. This may involve, for example, verifying that application 115 of FIG. 1 currently holds lock 430 of FIG. 4, to prevent application 115 of FIG. 1 from changing status 425 of FIG. 4 for a lock it does not currently hold.

Alternatively, at block 915, lock manager 125 of FIG. 1 may receive activation request 320 of FIG. 3 from application 115 of FIG. 1. Activation request 320 of FIG. 3 may identify, for example, application 115 of FIG. 1 as holding lock 430 of FIG. 4, resource 120 of FIG. 1 as the subject of lock 430 of FIG. 4, and/or lock 430 of FIG. 4 itself. At block 920, lock manager 125 of FIG. 1 may change status 425 of FIG. 4 for lock 430 of FIG. 4 to active. This may involve, for example, verifying that application 115 of FIG. 1 currently holds lock 430 of FIG. 4, to prevent application 115 of FIG. 1 from changing status 425 of FIG. 4 for a lock it does not currently hold.

Either way, once lock manager 125 of FIG. 1 has updated status 425 of FIG. 4, at block 925, lock manager 125 of FIG. 1 may send the updated status to node 105 of FIG. 1, to update the backup lock information.

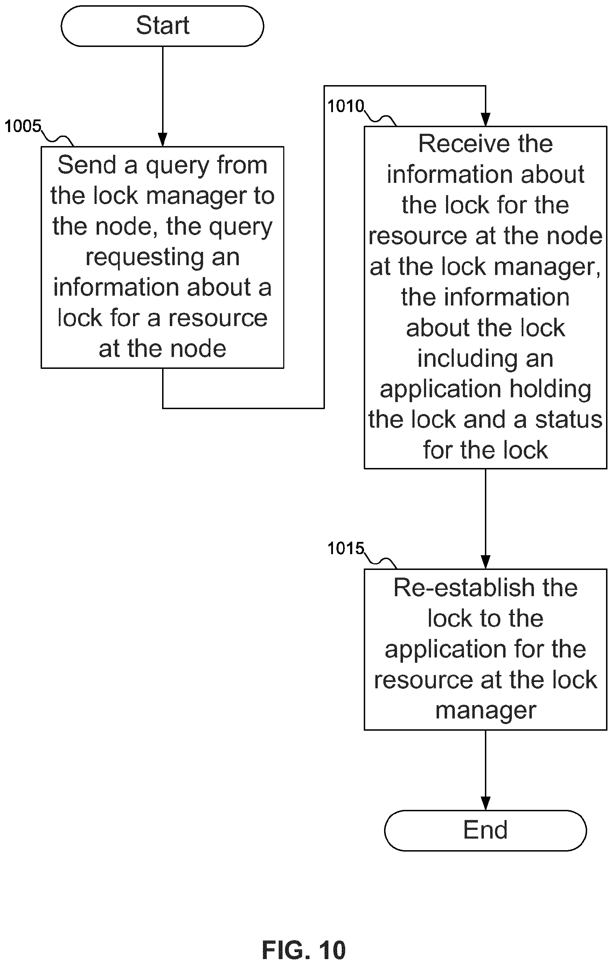

FIG. 10 shows a flowchart of an example procedure for lock manager 125 of FIG. 1 to rebuild locks 430 of FIG. 4, according to embodiments of the disclosure. In FIG. 10, at block 1005, the new lock manager 1005 may send request 515 of FIG. 5 to node 105 of FIG. 1, requesting information about a lock 430 of FIG. 4. Node 105 of FIG. 1 may store information about more than one lock 430 of FIG. 4, in which case request 515 of FIG. 5 may ask for information about all locks 430 of FIG. 4 for which node 105 of FIG. 1 stores information or just a subset of the locks (and perhaps just one lock 430 of FIG. 4). At block 1010, the new lock manager 125 of FIG. 1 may receive 520 of FIG. 5 from node 105 of FIG. 1, containing the requested information about lock(s) 430 of FIG. 4. Note that if lock information is stored on multiple nodes 105 of FIG. 1, then blocks 1005 and 1010 may be performed multiple times to recover all the information about locks 430 of FIG. 4 to be rebuilt. Finally, at block 1015, the new lock manager 125 of FIG. 1 may reestablish locks 430 of FIG. 4. The locks 430 of FIG. 4 so reestablished may be limited to those with statuses 425 of FIG. 4 set to active, to reduce the amount of time spent reestablishing locks 430 of FIG. 4.

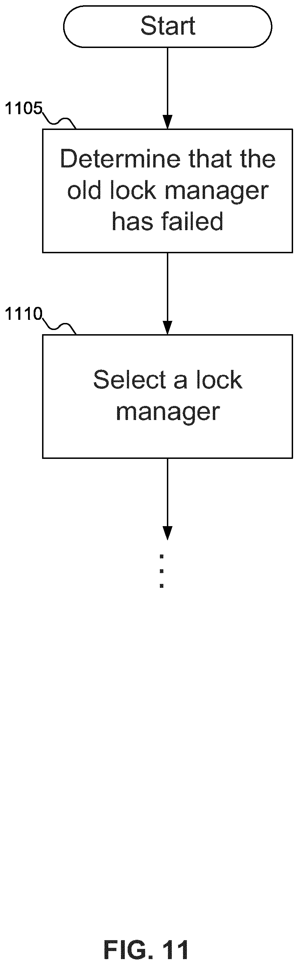

FIG. 11 shows additional operations that may be performed by lock manager 125 of FIG. 1 in rebuilding locks 430 of FIG. 4, according to embodiments of the disclosure. In FIG. 11, at block 1105 network 110 of FIG. 1 (or some process running on one of nodes 105 of FIG. 1) may determine that the old lock manager 125 of FIG. 1 has failed. This determination may trigger the process of rebuilding locks 430 of FIG. 4, as described above with reference to FIG. 10. At block 1110, a new lock manager 125 of FIG. 1 may be selected. As discussed with reference to FIG. 5, the new lock manager 125 of FIG. 1 may be the same as the old lock manager 125 of FIG. 1, or it may be a different node 105 of FIG. 1 selected to act as lock manager 125 of FIG. 1.

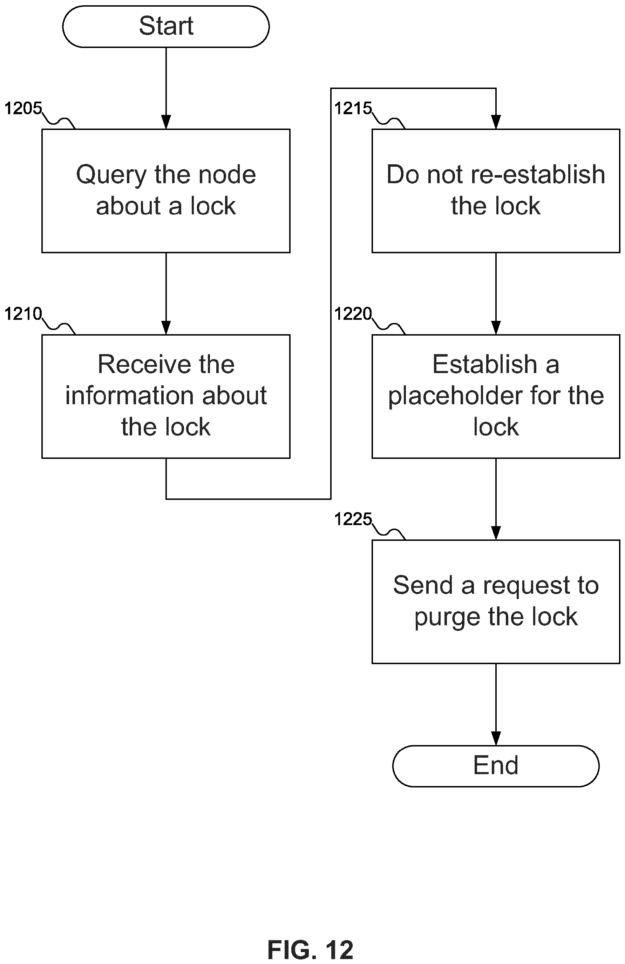

FIG. 12 shows a flowchart of an example procedure for lock manager 125 of FIG. 1 to determine whether to rebuild an individual lock 430 of FIG. 4, according to embodiments of the disclosure. In FIG. 12, at block 1205, lock manager 125 of FIG. 1 may send request 515 of FIG. 5 to node 105 of FIG. 1 for information about lock 430 of FIG. 4. At block 1210, lock manager 125 of FIG. 1 may receive message 520 of FIG. 5 with information about lock 430 of FIG. 4. If status 425 of FIG. 4 for lock 430 of FIG. 4 as received in message 520 of FIG. 5 indicates that status 425 of FIG. 4 for lock 430 of FIG. 4 is inactive, then at block 1215 lock manager 125 of FIG. 1 may opt not to reestablish the lock. Instead, at block 1220, lock manager 125 of FIG. 1 may establish a placeholder for lock 430 of FIG. 4 (that is, lock manager 125 of FIG. 1 may create an entry for lock 430 of FIG. 4 for resource 120 of FIG. 1 in table 130 of FIG. 1, but not indicate that application 115 of FIG. 1 currently holds lock 430 of FIG. 4). Finally, at block 1225, lock manager 125 of FIG. 1 may send message 530 of FIG. 5 to node 105 of FIG. 1 to purge inactive lock 430 of FIG. 430.

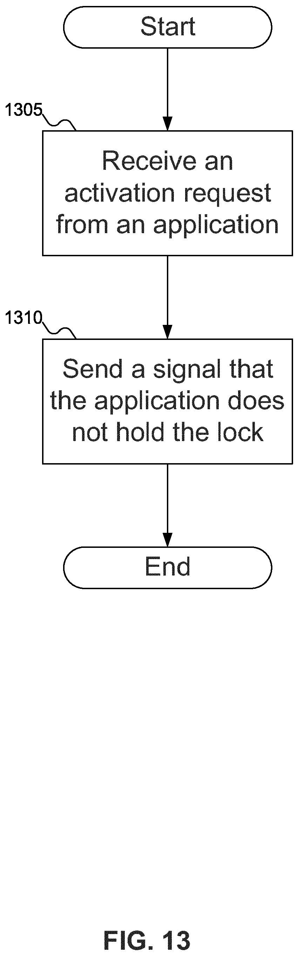

FIG. 13 shows a flowchart of an example procedure for lock manager 125 of FIG. 1 to inform application 115 of FIG. 1 that its lock on resource 120 of FIG. 1 does not exist, according to embodiments of the disclosure. In FIG. 13, at block 1305, lock manager 125 of FIG. 1 may receive activation request 320 of FIG. 3 from application 115 of FIG. 1. After checking that table 130 of FIG. 1 does not currently indicate that application 115 of FIG. 1 holds lock 430 of FIG. 4 for resource 120 of FIG. 1, at block 1310 lock manager 125 may so inform application 115 of FIG. 1 using signal 605 of FIG. 6.

In FIGs. 7-13, some embodiments of the disclosure are shown. But a person skilled in the art will recognize that other embodiments of the disclosure are also possible, by changing the order of the blocks, by omitting blocks, or by including links not shown in the drawings. All such variations of the flowcharts are considered to be embodiments of the disclosure, whether expressly described or not.

Embodiments of the disclosure may have a storage device include a data structure that may store timestamps for when commands are received from the host. By storing timestamps when commands are received from the host, embodiments of the disclosure offer a technical advantage in tracking command age: the command age as tracked may be closer to the amount of time the host spends waiting for the command to be processed, rather than the amount of time the storage device spends processing the command.

A Distributed Lock Manager (DLM) may track the granted and the waiting locks on the resources with each of node managing a subset of these locks. When there is a node failure, the locks being managed by the node may be lost. As part of DLM failback recovery, these locks may be rebuilt on the remaining nodes. The time taken for DLM recovery may be proportional to the number of locks which are rebuilt. The recovery time may be greater if DLM uses a Blocking Asynchronous Trap (AST)-based locking protocol where the number of locks to be rebuilt during recovery may be several times over.

Embodiments of the disclosure may use an active/inactive state for the granted locks in DLM.

If there is a node failure, the failback recovery may purge all the affected inactive locks on the remaining online nodes and may rebuild only the active locks.

Embodiments of the disclosure using a blocking AST-based protocol may reduce the lock failback recovery time. On a given node, the number of outstanding resource accesses at any moment is effectively an upper bound for the number of active locks to be rebuilt in case of node failure(s). The time taken for failback recovery may be calculated deterministically and may minimize its dependence on the allocated system resources.

The lock may be set as active whenever a process is granted the lock. Once the process is done accessing the resource, the process may notify the DLM to mark lock as inactive while still maintaining the ownership of the lock. If the process wants to access the resource once again, the process may notify DLM to mark the resource as active before accessing the resource.

Among the locks that are to be rebuilt during failback recovery, the inactive granted locks are purged and only the active ones are rebuilt.

If the process finds that the lock has been previously purged during recovery, the process may assume that it has lost the ownership of the lock and may issue a new lock request for the resource.

The following discussion is intended to provide a brief, general description of a suitable machine or machines in which certain aspects of the disclosure may be implemented. The machine or machines may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, a virtual machine, or a system of communicatively coupled machines, virtual machines, or devices operating together. Exemplary machines include computing devices such as personal computers, workstations, servers, portable computers, handheld devices, telephones, tablets, etc., as well as transportation devices, such as private or public transportation, e.g., automobiles, trains, cabs, etc.

The machine or machines may include embedded controllers, such as programmable or non-programmable logic devices or arrays, Application Specific Integrated Circuits (ASICs), embedded computers, smart cards, and the like. The machine or machines may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciate that network communication may utilize various wired and/or wireless short range or long range carriers and protocols, including radio frequency (RF), satellite, microwave, Institute of Electrical and Electronics Engineers (IEEE) 802.11, Bluetooth^{®}, optical, infrared, cable, laser, etc.

Embodiments of the present disclosure may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, e.g., RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associated data may be used in a distributed environment, and stored locally and/or remotely for machine access.

Embodiments of the disclosure may include a tangible, non-transitory machine-readable medium comprising instructions executable by one or more processors, the instructions comprising instructions to perform the elements of the disclosures as described herein.

The various operations of methods described above may be performed by any suitable means capable of performing the operations, such as various hardware and/or software component(s), circuits, and/or module(s). The software may comprise an ordered listing of executable instructions for implementing logical functions, and may be embodied in any "processor-readable medium" for use by or in connection with an instruction execution system, apparatus, or device, such as a single or multiple-core processor or processor-containing system.

The blocks or steps of a method or algorithm and functions described in connection with the embodiments disclosed herein may be embodied directly in hardware, in a software module executed by a processor, or in a combination of the two. If implemented in software, the functions may be stored on or transmitted over as one or more instructions or code on a tangible, non-transitory computer-readable medium. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD ROM, or any other form of storage medium known in the art.

Having described and illustrated the principles of the disclosure with reference to illustrated embodiments, it will be recognized that the illustrated embodiments may be modified in arrangement and detail without departing from such principles, and may be combined in any desired manner. And, although the foregoing discussion has focused on particular embodiments, other configurations are contemplated. In particular, even though expressions such as "according to an embodiment of the disclosure" or the like are used herein, these phrases are meant to generally reference embodiment possibilities, and are not intended to limit the disclosure to particular embodiment configurations. As used herein, these terms may reference the same or different embodiments that are combinable into other embodiments.

The foregoing illustrative embodiments are not to be construed as limiting the disclosure thereof. Although a few embodiments have been described, those skilled in the art will readily appreciate that many modifications are possible to those embodiments without materially departing from the novel teachings and advantages of the present disclosure. Accordingly, all such modifications are intended to be included within the scope of this disclosure as defined in the claims.

## Claims

1. A system, comprising:
a node including a resource; and
a lock manager, the lock manager including storage for a data structure for a lock, the data structure including a first identifier for the resource, a second identifier for an application, and a status for the lock.

2. The system according to claim 1, wherein the status for the lock is active.

3. The system according to claim 1 or 2, wherein the lock manager is configured to update the status for the lock to an updated status for the lock based on a request from the application.

4. The system according to claim 3, wherein the lock manager includes an Application Programming Interface, API, to receive the request from the application to update the status for the lock.

5. The system according to claim 3 or 4, wherein the lock manager is configured to send the updated status for the lock to the node.

6. The system according to any one of claims 1 to 5, wherein the lock manager is configured to send the data structure to the node.

7. The system according to any one of claims 1 to 6, wherein a second lock manager is configured to request the data structure from the node to rebuild the data structure.

8. The system according to claim 7, wherein the second lock manager is configured to include the second identifier for the application in the data structure based at least in part on the status for the lock being active.

9. The system according to claim 8, wherein the second lock manager is configured to send a signal to the application based at least in part on the data structure including the second identifier for the application.

10. The system according to claim 9, wherein the second lock manager is configured to send the signal to the application based at least in part on the application sending an activation request to the lock manager.

11. A method, comprising:
receiving a lock request for a resource at a node in a network from an application at a lock manager;
determining that the resource at the node is unlocked;
storing a lock at the lock manager, the lock associated with the resource at the node and the application;
setting a status for the lock to active at the lock manager; and
issuing the lock to the application from the lock manager.

12. The method according to claim 11, further comprising sending the lock and the status for the lock from the lock manager to the node.

13. The method according to claim 11, further comprising:
receiving a request for the lock from the application at the lock manager; and
updating the status for the lock at the lock manager based at least in part on the request.

14. The method according to claim 13, further comprising sending the status for the lock from the lock manager to the node.

15. The method according to claim 13 or 14, further comprising:
receiving an activation request for the lock from the application at the lock manager; and
updating the status for the lock to active at the lock manager.

## Amended claims

### Amended claims in accordance with Rule 137(2) EPC.

1. A system, comprising:
a node (105, 105-1, 105-2, 105-3) including a resource (120, 120-1, 120-2); and
a first lock manager, the lock manager including storage for a data structure (130) for a lock (430, 430-1, 430-2, 430-3), the data structure (130) including a first identifier for the resource (120, 120-1, 120-2), a second identifier for an application (115), and a status (425) for the lock (430, 430-1, 430-2, 430-3),
a second lock manager that is configured to replace the first lock manager and to request (315, 320, 515) the data structure (130) from the node (105, 105-1, 105-2, 105-3) to rebuild the data structure (130) based on the first lock manager fails or becomes inoperative.

2. The system according to claim 1, wherein the status (425) for the lock (430, 430-1, 430-2, 430-3) is active.

3. The system according to claim 1 or 2, wherein the first and second lock managers are configured to update the status (425) for the lock (430, 430-1, 430-2, 430-3) to an updated status (425) for the lock (430, 430-1, 430-2, 430-3) based on a request (315, 320, 515) from the application (115).

4. The system according to claim 3, wherein the first and second lock managers include an Application Programming Interface, API, to receive the request (315, 320, 515) from the application (115) to update the status (425) for the lock (430, 430-1, 430-2, 430-3).

5. The system according to claim 3 or 4, wherein the first and second lock managers are configured to send the updated status (425) for the lock (430, 430-1, 430-2, 430-3) to the node (105, 105-1, 105-2, 105-3).

6. The system according to any one of claims 1 to 5, wherein the first and second lock managers are configured to send the data structure (130) to the node (105, 105-1, 105-2, 105-3).

7. The system according to any one of claims 1 to 6, wherein the second lock manager is configured to include the second identifier for the application (115) in the data structure (130) based at least in part on the status (425) for the lock (430, 430-1, 430-2, 430-3) being active.

8. The system according to claim 7, wherein the second lock manager is configured to send a signal (605) to the application (115) based at least in part on the data structure (130) including the second identifier for the application (115).

9. The system according to claim 8, wherein the second lock manager is configured to send the signal (605) to the application (115) based at least in part on the application (115) sending an activation request (310, 320) to the lock manager.

10. A method, comprising:
receiving a lock request (305) for a resource (120, 120-1, 120-2) at a node (105, 105-1, 105-2, 105-3) in a network (110) from an application (115) at a first lock manager;
determining that the resource (120, 120-1, 120-2) at the node (105, 105-1, 105-2, 105-3) is unlocked;
storing a lock (430, 430-1, 430-2, 430-3) at the first lock manager, the lock (430, 430-1, 430-2, 430-3) associated with the resource (120, 120-1, 120-2) at the node (105, 105-1, 105-2, 105-3) and the application (115);
setting a status (425) for the lock (430, 430-1, 430-2, 430-3) to active at the lock manager; and
issuing the lock (430, 430-1, 430-2, 430-3) to the application (115) from the lock manager; and based on the first lock manager fails or becomes inoperative;
replacing the first lock manager with the second lock manager and requesting (315, 320, 515) the data structure (130) from the node (105, 105-1, 105-2, 105-3) to rebuild the data structure (130).

11. The method according to claim 10, further comprising sending the lock (430, 430-1, 430-2, 430-3) and the status (425) for the lock (430, 430-1, 430-2, 430-3) from the first or second lock manager to the node (105, 105-1, 105-2, 105-3).

12. The method according to claim 10, further comprising:
receiving a request (315, 320, 515) for the lock (430, 430-1, 430-2, 430-3) from the application (115) at the first or second lock manager; and
updating the status (425) for the lock (430, 430-1, 430-2, 430-3) at the lock manager based at least in part on the request (315, 320, 515).

13. The method according to claim 12, further comprising sending the status (425) for the lock (430, 430-1, 430-2, 430-3) from the lock manager to the node (105, 105-1, 105-2, 105-3).

14. The method according to claim 12 or 13, further comprising:
receiving an activation request (310, 320) for the lock (430, 430-1, 430-2, 430-3) from the application (115) at the lock manager; and
updating the status (425) for the lock (430, 430-1, 430-2, 430-3) to active at the lock manager.
